# EUROPEAN PATENT APPLICATION

(11) **EP 2 381 364 A1**
(43) Date of publication of application: **26.10.2011**
(21) Application number: 10731207.6
(22) Date of filing: 08.01.2010
(51) Int. Cl.: G06F 9/48

(54) **APPARATUS, METHOD AND COMPUTER PROGRAM FOR SUPPORTING DATA LINKAGE AMONG PLURALITY OF APPLICATIONS**

(30) Priority: 15.01.2009 JP 2009006204
(71) Applicant: International Business Machines Corporation, Armonk, NY 10504 (US)
(72) Inventor: WAKAO Masaki, Yamato-shi Kanagawa 242-8502 (JP); UCHIDA Kenji, Yamato-shi Kanagawa 242-8502 (JP)
(74) Representative: Litherland, David Peter
(86) International application number: PCT/JP2010/050159
(87) International publication number: WO 2010/082538

(57) **Abstract**

[Object] To provide an apparatus, a method, and a computer program that support data linkage so that multiple applications can be linked flexibly without impairing flexibility in designing applications.

[Solving Means] If a link-destination application is linked with another application, it is determined whether only one of the output parameter of the another application and the input parameter of the link-destination application is provided with meta-information. If it is determined that only one of these parameters is provided with meta-information, the meta-information is added to the other of these parameters. If the meta-information added to the other and meta-information added to the output parameter of a link-source application or the meta-information added to the input parameter of the link-destination application are matched, the link-source application and link-destination application are linked.

## Description

### [Technical Field]

The present invention relates to an apparatus, a method, and a computer program that each support data linkage between multiple applications so that the multiple applications can be linked flexibly without impairing flexibility in designing applications.

### [Background Art]

With the rapid development of Internet technology, so-called "mashup," in which multiple services provided on the Web are linked to construct a new service, has been actively performed. In linking multiple services, a mashup performer must manually make a setting for using an output element from one service as one of parameters of a service to be linked after the mashup performer understands the contents of each service. This makes the mashup work complicated.

Various data link technologies have been developed to link services as smoothly as possible. For example, Patent Document 1 discloses a data linkage apparatus that, by previously registering, in a clipboard, data formats for establishing a link between applications in order to realize data sharing between applications, is allowed to establish a data link only between applications that transmit or receive data including data matching at least one of the registered data formats. This makes it possible to link applications that transmit or receive data including data matching at least one of the registered data formats. This makes it possible to automatically link applications without having to perform an explicit operation.

Patent Document 2 discloses a service link information creation system that creates a link scenario for linking element services and links element services on the basis of the semantic ontologies of entities corresponding to input/output meta-data. Thus, even if the names of entities differ from each other, element services can be linked if the semantic ontologies are identical or similar to each other.

### [Related Art Documents]

### [Patent Documents]

[Patent Document 1] Japanese Unexamined Patent Application Publication No. 2006-190008
[Patent Document 2] Japanese Unexamined Patent

### Application Publication No. 2008-210227

### [Summary of the Invention]

### [Problems to be Solved by the Invention]

However, for the data linkage apparatus disclosed in Patent Document 1, a data link cannot be established unless data formats of data added to data that can be transmitted or received between applications to be linked are registered in advance. Therefore, in order to practically use the data linkage apparatus, many data formats must be registered in advance. Also, data to be added is not automatically added and a user must consciously add such data. Therefore, after all, it is difficult to link applications designed independently of each other without considering each other.

As for the service link information creation system disclosed in Patent Document 2, the possibility of linkage can be determined using semantic ontologies, while an ontology database must be created in advance. For this reason, the system has a problem that when services increase, an enormous amount of data must be registered in the ontology database and therefore it is difficult to sufficiently cope with web applications that occur from day to day.

The present invention was made in view of the foregoing. Accordingly, it is an object of the present invention to provide an apparatus, a method, and a computer program that each support data linkage between multiple applications so that the multiple applications can be linked flexibly without impairing flexibility in designing applications.

### [Means for Solving the Problems]

In order to achieve the above-mentioned object, a data linkage support apparatus according to a first aspect of the present invention includes: meta information storage section for, if a data link between applications is established, stores meta information added to an output parameter of a link-source application and/or meta-information added to an input parameter of a link-destination application; link determination section for determining whether the link-destination application is linked with another application; meta information determination section for, if the link determination section determines that the link-destination application is linked with another application, determining whether only one of an output parameter of the another application and the input parameter of the link-destination application is provided with meta-information; meta information providing section for, if the meta information determination section determines that only one of the output parameter of the another application and the input parameter of the link-destination application is provided with meta-information, adding the meta information to the other of the output parameter of the another application and the input parameter of the link-destination application; determination section for determining whether the meta information added to the other by the meta-information providng section and the meta information added to the output parameter of the link-source application or the meta-information added to the input parameter of the link-destination application are matched; and linkage section for, if the determination section determines that the pieces of meta information are matched, linking the link-source application and the link-destination application.

The data linkage support apparatus according to the first aspect of the present invention preferably further includes weighting section for assigning a weighting factor to meta-information added by the meta-information addition section.

In the data linkage support apparatus according to the first aspect of the present invention, the weighting factor having a smaller value is preferably assigned to meta-information added more indirectly on the basis of a presumption.

The data linkage support apparatus according to the first aspect of the present invention preferably further includes: priority setting section for setting priorities for adding meta-information, on the basis of the weighting factor; link specification receiving section for receiving specification of applications to be linked; and candidate application display section for, if the link specification receiving section receiving specification of a link-source application, lists link-destination applications that can be linked to the link-source application, in a descending order of the set priorities.

In the data linkage support apparatus according to the first aspect of the present invention, the priority setting section preferably calculates a sum value by summing a weighting factor of meta-information added to an output parameter of a link-source application and a weighting factor of meta-information added to an input parameter of a link-destination application and sets higher priorities for larger sum values.

In order to achieve the above-mentioned object, a data linkage support method according to a second aspect of the present invention includes the steps of: if a data link between applications is established, storing meta information added to an output parameter of a link-source application and/or meta-information added to an input parameter of a link-destination application; determining whether the link-destination application is linked with another application; if it is determined that the link-destination application is linked with another application, determining whether only one of an output parameter of the another application and the input parameter of the link-destination application is provided with meta-information; if it is determined that only one of the output parameter of the another application and the input parameter of the link-destination application is provided with meta-information, adding the meta information to the other of the output parameter of the another application and the input parameter of the link-destination application; determining whether the meta information added to the other and the meta information added to the output parameter of the link-source application or the meta-information added to the input parameter of the link-destination application are matched; and if it is determined that the pieces of meta information are matched, linking the link-source application and the link-destination application.

In order to achieve the above-mentioned object, a computer program product according to a third aspect of the present invention is a computer program that supports data linkage between a plurality of applications and is executable by a computer. The computer program causes the computer to function as: meta information storage section for, if a data link between applications is established, storing meta information added to an output parameter of a link-source application and/or meta-information added to an input parameter of a link-destination application; link determination section for determining whether the link-destination application is linked with another application; meta information determination section for, if the link determination section determines that the link-destination application is linked with another application, determining whether only one of an output parameter of the another application and the input parameter of the link-destination application is provided with meta-information; meta information providing section for, if the meta information determination section determines that only one of the output parameter of the another application and the input parameter of the link-destination application is provided with meta-information, adding the meta information to the other of the output parameter of the another application and the input parameter of the link-destination application; determination section for determining whether the meta information added to the other by the meta-information providing section and the meta information added to the output parameter of the link-source application or the meta-information added to the input parameter of the link-destination application are matched; and linkage section for, if the determination section determines that the pieces of meta information are matched, linking the link-source application and the link-destination application.

The computer program product according to the third aspect of the present invention preferably causes the computer to further function as weighting section for assigning a weighting factor to meta-information added by the meta-information addition section.

In the computer program product according to the third aspect of the present invention, the weighting factor having a smaller value is preferably assigned to meta-information added more indirectly on the basis of a presumption.

The computer program product according to the third aspect of the present invention preferably causes the computer to further function as: priority setting section for setting priorities for adding meta-information, on the basis of the weighting factor; link specification receiving section for receiving specification of applications to be linked; and candidate application display section for, if the link specification receiving section receives specification of a link-source application, lists link-destination applications that can be linked to the link-source application, in a descending order of the set priorities.

The computer program product according to the third aspect of the present invention preferably causes the priority setting section to function as: section for calculating a sum value by summing a weighting factor of meta-information added to an output parameter of a link-source application and a weighting factor of meta-information added to an input parameter of a link-destination application; and section for setting higher priorities for larger sum values.

### [Advantages]

By adopting the present invention, meta-information explicitly added by a user or meta-information of already linked applications is collected and stored. Thus, even if an application is not provided with meta-information, meta-information for linkage can be added to the application on the basis of a presumption. As a result, applications, such as web services, can be linked (mashed up) reliably. Also, by assigning weights to pieces of meta-information, it is possible to assign priorities to applications that can be linked. This allows selection of an application that can be linked, in the descending order of the priorities, as well as can prevent unexpected transmission of meta-information to each application due to automatic addition of meta-information.

### [Brief Description of the Drawings]

[FIG. 1] FIG. 1 is a block diagram showing an example configuration of a data linkage system including an apparatus for supporting data linkage among multiple applications according to a first embodiment of the present invention.
[FIG. 2] FIG. 2 is a drawing showing an example data configuration of a mashup information storage section according to the first embodiment of the present invention.
[FIG. 3] FIG. 3 is a drawing showing related-art mashup operation.
[FIG. 4] FIG. 4 is a drawing showing mashup operation performed using meta-information in the data linkage system according to the first embodiment of the present invention.
[FIG. 5] FIG. 5 is a drawing showing an example of mashup operation in a case where a link-destination application is not provided with meta-information.
[FIG. 6] FIG. 6 is a drawing showing function blocks of the data linkage support apparatus according to the first embodiment of the present invention.
[FIG. 7] FIG. 7 is a flowchart showing the steps of a data linkage support process performed by a CPU of the data linkage support apparatus according to the first embodiment of the present invention.
[FIG. 8] FIG. 8 is a drawing showing an example data configuration of a mashup information storage section according to a second embodiment of the present invention.
[FIG. 9] FIG. 9 is a drawing showing mashup operation using meta-information.
[FIG. 10] FIG. 10 is a drawing showing mashup operation in a case where weighting factors are assigned.
[FIG. 11] FIG. 11 is a schematic drawing showing information stored in a mashup information storage section as information on the existing application links.
[FIG. 12] FIG. 12 is a schematic drawing showing an example where priorities are assigned to other applications.
[FIG. 13] FIG. 13 is a drawing showing function blocks of a data linkage support apparatus according to the second embodiment of the present invention.
[FIG. 14] FIG. 14 is a flowchart showing the steps of a data linkage support process performed by a CPU of the data linkage support apparatus according to the second embodiment of the present invention.
[FIG. 15] FIG. 15 is a drawing showing an example of an application list.
[FIG. 16] FIG. 16 is a drawing showing an example of an operation screen of a mashup tool for increasing the efficiency of mashup.

### [Best Mode for Carrying Out the Invention]

Hereafter, apparatuses for supporting data linkage among multiple applications according to embodiments of the present invention will be described with reference to the accompanying drawings. The following embodiments do not limit the invention as set forth in the appended Claims. Also, not all combinations of the features described in the embodiments are essential as the solving means.

Also, the present invention can be carried out in many different modes and should not be construed only as the described embodiments. Same elements are given same reference numerals through the embodiments.

While the apparatuses that are computer systems including a computer program and support data linkage among multiple applications will be described in the following embodiments, a part of the present invention can be carried out as a computer program executable by a computer. Therefore, the present invention can be embodied as hardware, which is an apparatus for supporting data linkage among multiple applications, as software, or as a combination of software and hardware. The above-mentioned computer program can be recorded into a recording medium readable by any computer, such as a hard disk, a DVD, a CD, an optical storage device, or a magnetic storage device.

In the embodiments of the present invention, meta-information explicitly added by a user or meta-information of already linked applications is collected and then stored. Thus, even if an application is not provided with meta-information, meta-information for linkage can be added on the basis of a presumption. This makes it possible to reliably link (mash up) applications, such as web services. Also, by assigning weights to pieces of meta-information, priorities can be assigned to applications that can be linked. Thus, an application that can be linked can be selected in the descending order of the priorities. Also, unexpected transmission of meta-information to applications due to automatic addition of meta-information can be prevented.

### First Embodiment

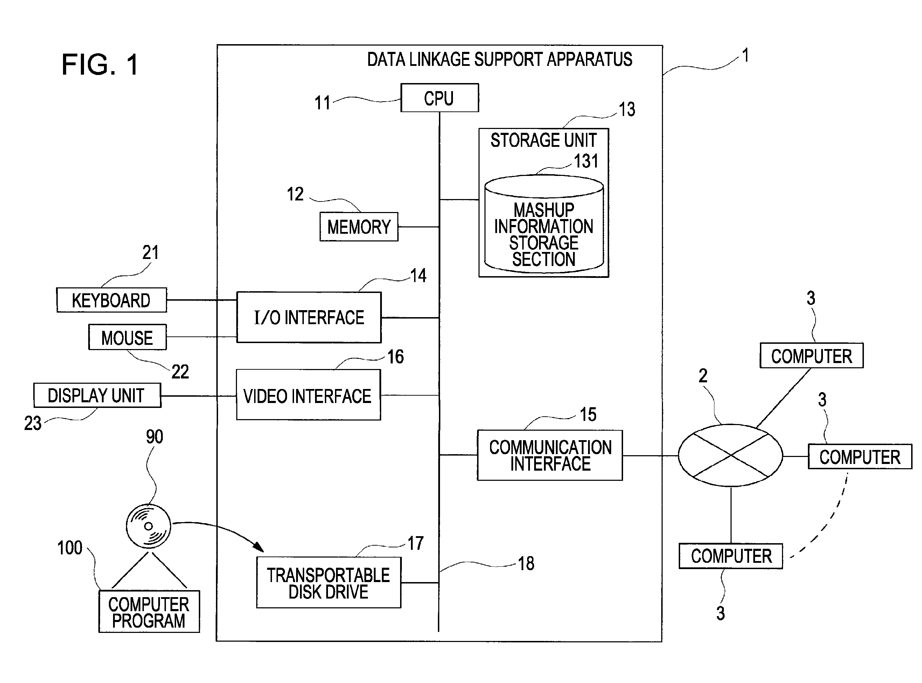

FIG. 1 is a block diagram showing an example configuration of a data linkage system including an apparatus for supporting data linkage among multiple applications according to a first embodiment of the present invention. In the data linkage system according to the first embodiment of the present invention, multiple computers 3 and data linkage support apparatus 1 are connected to each other in such a manner that the computers and data linkage support system can perform data communications with each other via a network 2.

The data linkage support apparatus 1 includes at least a CPU (central processing unit) 11, a memory 12, a storage unit 13, an I/O interface 14, a communication interface 15, a video interface 16, a transportable disk drive 17, and an internal bus 18 connecting the above-mentioned hardware elements.

The CPU 11 is connected to the above-mentioned hardware elements of the data linkage support apparatus 1 via the internal bus 18. The CPU 11 controls operation of the hardware elements and performs various software functions on the basis of a computer program 100 stored in the storage unit 13. The memory 12 is a volatile memory, such as a SRAM or a SDRAM. When executing the computer program 100, a load module is loaded into the memory 12, which in turn stores temporary data or the like produced when executing the computer program 100.

The storage unit 13 is a built-in, fixed storage unit (hard disk), a ROM, or the like. The computer program 100 stored in the storage unit 13 is downloaded from a transportable recording medium 90 storing programs, data, and the like, such as a DVD or a CD-ROM, to the transportable disk drive 17. For execution, the computer program 100 is loaded from the storage unit 13 into the memory 12 and then executed. As a matter of course, the computer program 100 may be a computer program downloaded from an external computer connected to the network 2 via the communication interface 15.

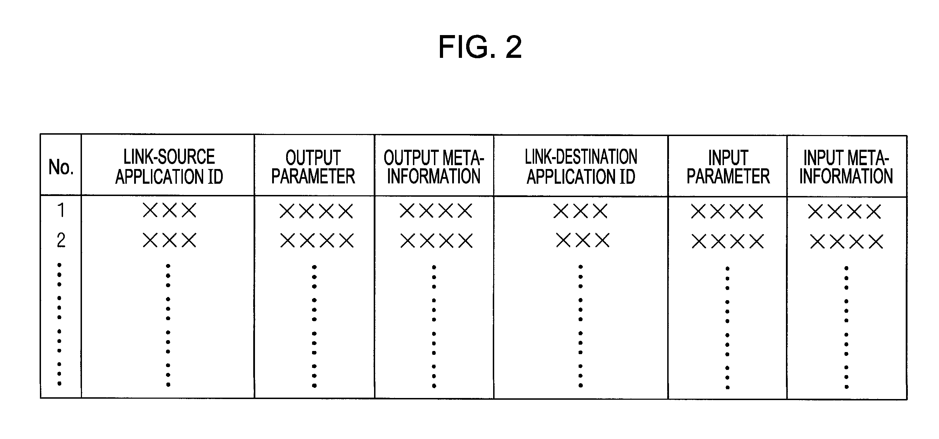

The storage unit 13 includes a mashup information storage section (meta-information storage section) 131. Each time mashup is performed, the mashup information storage section 131 receives meta-information added to the input or output parameters of data-linked applications by the external computers 3 via the network 2 and stores the meta-information. FIG. 2 is a drawing showing an example configuration of data stored in the mashup information storage section 131 according to the first embodiment of the present invention.

As shown in FIG. 2, the mashup information storage section 131 stores the link-source application ID that is information for identifying a mashed-up link-source application, the output parameter of the link-source application, output meta-information added to the output parameter, the link-destination application ID that is information for identifying a mashed-up link-destination application, the input parameter of the link-destination application, and input meta-information added to the input parameter. Even if the output parameter and the input parameter are not matched, the applications can be linked if the output meta-information added to the output parameter and the input meta-information added to the input parameter are matched. If either of the output parameter and input parameter includes meta-information, it is sufficient.

Back in FIG. 1, the communication interface 15 is connected to the internal bus 18 and thus connected to the external network 2, such as the Internet, a LAN, or a WAN. This makes it possible to receive or transmit data from or to the external computers 3 and the like.

The I/O interface 14 is connected to data input media, such as a keyboard 21 and a mouse 22, so as to receive input of data. The video interface 16 is connected to a display unit 23, such as a CRT monitor or an LCD, so as to display predetermined images.

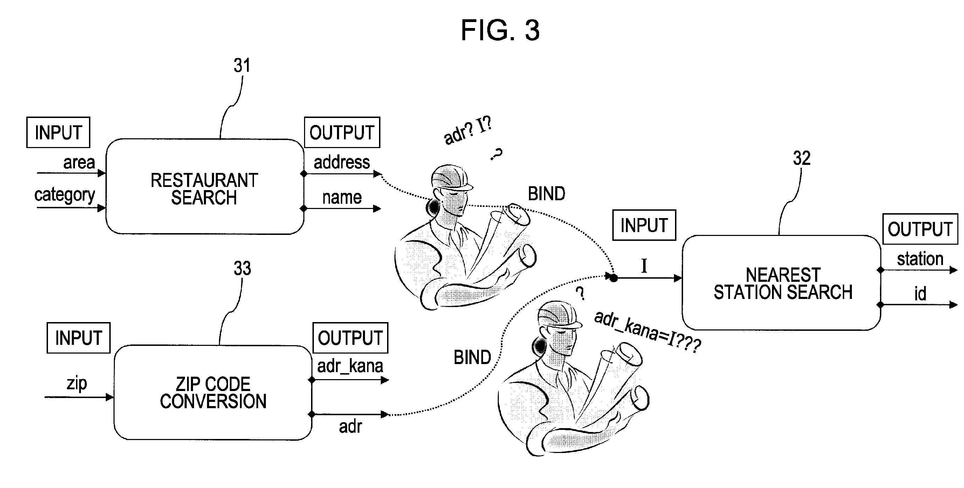

Hereafter, operation of the data linkage system using the data linkage support apparatus 1 configured as described above will be described. FIG. 3 is a drawing showing related-art mashup operation. In FIG. 3, first, an attempt is made to link an application 31 for performing a restaurant search process and an application 32 for performing a nearest station search process. In this case, the output parameters of the application 31 are "address" indicating the address of a restaurant and "name" indicating the name of the restaurant. On the other hand, the input parameter of an application 32 is "I." As seen, the designers of the applications can set input or output parameters freely. Therefore, it is difficult to previously set common input/output parameters for applications assuming that the applications will be linked. Therefore, in order to link the application 31 and application 32, it is necessary to bind together the input parameter of the application 32 and the output parameter, address, of the application 31. For this reason, a user must make a setting explicitly so that the input parameter, I, of the application 32 and the output parameter, address, of the application 31 are matched.

On the other hand, an attempt is made to link an application 33 for performing a zip code conversion process and the application 32. In this case, the output parameters of the application 33 are "adr" indicating the address corresponding to a zip code and "adr_kana" that is the kana representation of the address. Therefore, in order to link the application 33 and application 32, the user must make a setting explicitly so that the input parameter, I, of the application 32 and the output parameter, adr, of the application 33 are matched.

However, in a case where the application 31 and application 32 are already linked, a setting is already made so that the input parameter, I, of the application 32 matches the output parameter, address, of the application 31. For this reason, a setting cannot be made so that the input parameter, I, of the application 32 matches the output parameter, adr, of the application 33. Therefore, there is a problem that although the input parameter and output parameter to be bound for linkage are known, the application 33 and application 32 cannot be linked.

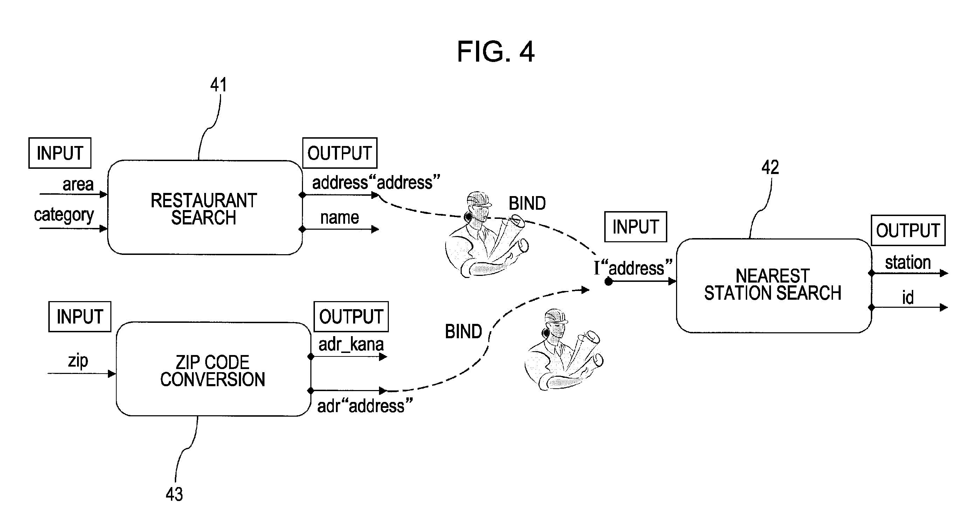

For this reason, in the first embodiment, meta-information is added to the input or output parameter of each application. FIG. 4 is a drawing showing mashup operation performed using meta-information in the data linkage system according to the first embodiment of the present invention.

In FIG. 4, first, an attempt is made to link an application 41 for performing a restaurant search process and an application 42 for performing a nearest station search process. In this case, the output parameters of the application 41 are "address" indicating the address of a restaurant and "name" indicating the name of the restaurant. On the other hand, the input parameter, I, of the application 42 is "I." In order to link the application 41 and application 42, it is necessary to bind together the input parameter, I, of the application 42 and the output parameter, address, of the application 41, as in FIG. 3. For this reason, a user must make a setting explicitly so that the input parameter, I, of the application 42 matches the output parameter, address, of the application 41.

However, even if such a setting is made, the application 42 can be linked only to the application 41, as in FIG. 3. For this reason, meta-information is added to the input or output parameter of each application. Meta-information to be added is not limited to particular meta-information as long as the meta-information is meta-information specific to the user, such as "date," "price," "address," or "latitude." Normalized data type, such as an address, latitude, longitude, or date, may be added or data format, such as yyyy/mm/dd, may be added.

In FIG. 4, meta-information "address" has been added to the output parameter, address, of the application 41. The meta-information "address" has been also added to the input parameter of the application 42. Therefore, even if the output parameter, address, of the application 41 and the input parameter, I, of application 42 differ from each other, the output parameter and input parameter can be bounded, since the meta-information "address" added to the output parameter and the meta-information "address" added to the input parameter are matched.

As such, the meta-information "address" has been also added to the output parameter, adr, of an application 43 for performing a zip code conversion process. Therefore, even if the output parameter, adr, of the application 43 and the input parameter, I, of the application 42 differ from each other, the output parameter and input parameter can be bound together, since the meta-information "address" added to the output parameter and the meta-information "address" added to the input parameter are matched. By adding meta-information as described above, it is also possible to link applications freely without impairing flexibility in designing applications.

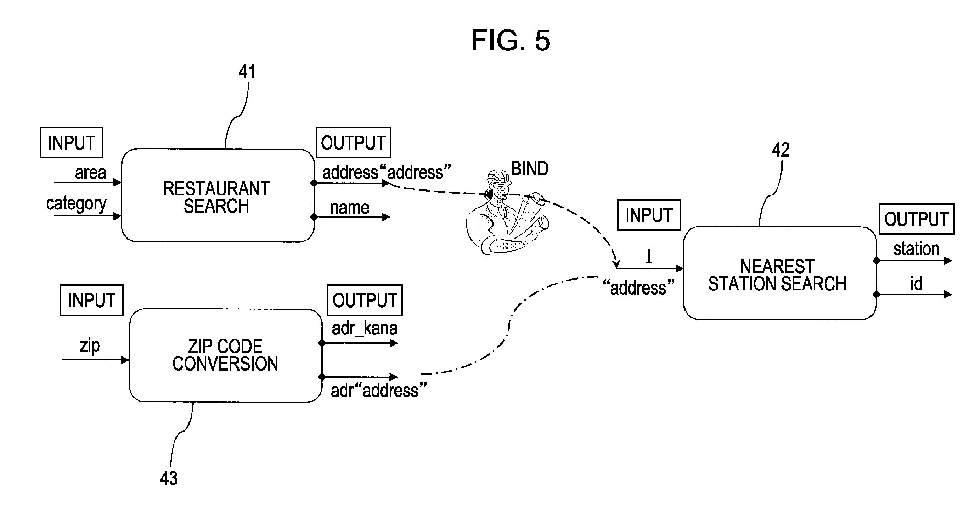

Note that when designing applications, meta-information is not always added to all the applications. FIG. 5 is a drawing showing an example of mashup operation in a case where meta-information is not added to a link-destination application.

In FIG. 5, first, an attempt is made to link the application 41 for performing a restaurant search process and the application 42 for performing a nearest station search process. In this case, the output parameters of the application 41 are "address" indicating the address of a restaurant and "name" indicating the name of the restaurant. On the other hand, the input parameter of the application 42 is "I." In order to link the application 41 and application 42, it is necessary to bind together the input parameter, I, of the application 42 and the output parameter, address, of the application 41, as in FIG. 3.

However, while the output parameter, address, of the application 41 is provided with the meta-information "address," the input parameter, I, of the application 42 is not provided with meta-information. In this case, even if the output parameter, address, of the application 41 and the input parameter, I, of the application 42 differ from each other, the output parameter and input parameter can be bounded together if the meta-information "address" added to the output parameter and the meta-information "address" added to the input parameter are matched. Therefore, once the application 41 and application 42 are linked, it is presumed that the input parameter, I, of the application 42 is provided with the meta-information "address" and then the meta-information "address" based on the presumption is stored in the mashup information storage section 131.

As seen, it is presumed that the input parameter is provided with the meta-information, on the basis of the fact that the output parameter and input parameter are bound together. Therefore, it can be determined that, for example, even if the output parameter, adr, of the application 43, which is another application, and the input parameter, I, of and application 42 differ from each other, the output parameter and input parameter can be bound together if the output parameter, adr, of the application 43 is also provided with the meta-information "address" and if the meta-information "address" added to the output parameter, adr, and the meta-information "address" stored in the mashup information storage section 131 on the basis of the presumption are matched.

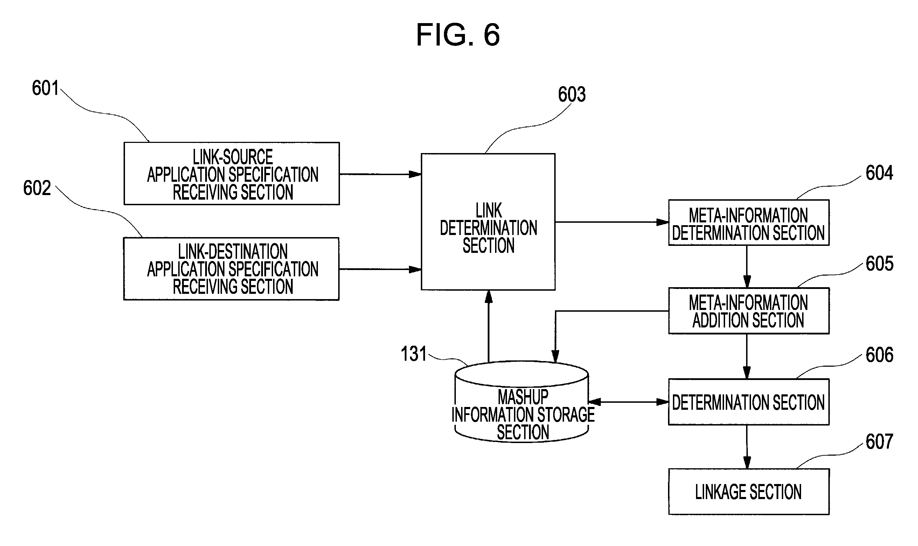

FIG. 6 is a drawing showing function blocks of the data linkage support apparatus 1 according to the first embodiment of the present invention. First, when a data link is established between applications via the network 2, meta-information added to the output parameter of the link-source application and/or meta-information added to the input parameter of the link-destination are collected and stored in the mashup information storage section 131 of the storage unit 13.

A link-source application specification receiving section (link specification receiving means) 601 receives specification of an application to serve as a link source. Specifically, the link-source application specification receiving section 601 receives specification made on a displayed application list through a click of a mouse 22 or the like, key-in of a keyboard 21, or the like.

A link-destination application specification receiving section (link specification receiving means) 602 receives specification of an application to serve as a link destination. Specifically, the link-destination application specification receiving section 602 receives specification made on the displayed application list through a click of the mouse 22 or the like, key-in of the keyboard 21, or the like.

A link determination section 603 determines whether the link-destination application, whose specification has been received, is linked with another application. Specifically, the link determination section 603 refers to the mashup information storage section 131 to determine whether there exists an already linked application.

When the link determination section 603 determines that the link-destination application is linked with another application, a meta-information determination section 604 determines whether only one of the output parameter of the linked another application and the input parameter of the link-destination application, whose specification has been received, is provided with meta-information. Whether only one of these parameters is provided with meta-information can be determined on the basis of whether such meta-information is stored in the mashup information storage section 131.

If the meta-information determination section 604 determines that only one of these parameters is provided with meta-information, a meta-information addition section 605 adds the provided meta-information to the other of these parameters. Specifically, if only the output parameter of the linked another application is provided with meta-information, the meta-information addition section 605 adds the meta-information to the input parameter of the link-destination application, whose specification has been received. In contrast, if only the input parameter of the link-destination application, whose specification has been received, is provided with meta-information, the meta-information addition section 605 adds the meta-information to the output parameter of the linked another application.

A determination section 606 determines whether the meta-information added by the meta-information addition section 605 and the meta-information added to the output parameter of the link-source application or the meta-information added to the input parameter of the link-destination application are matched. If the determination section 606 determines that both the pieces of meta-information are matched, a linkage section 607 links the link-source application and link-destination application.

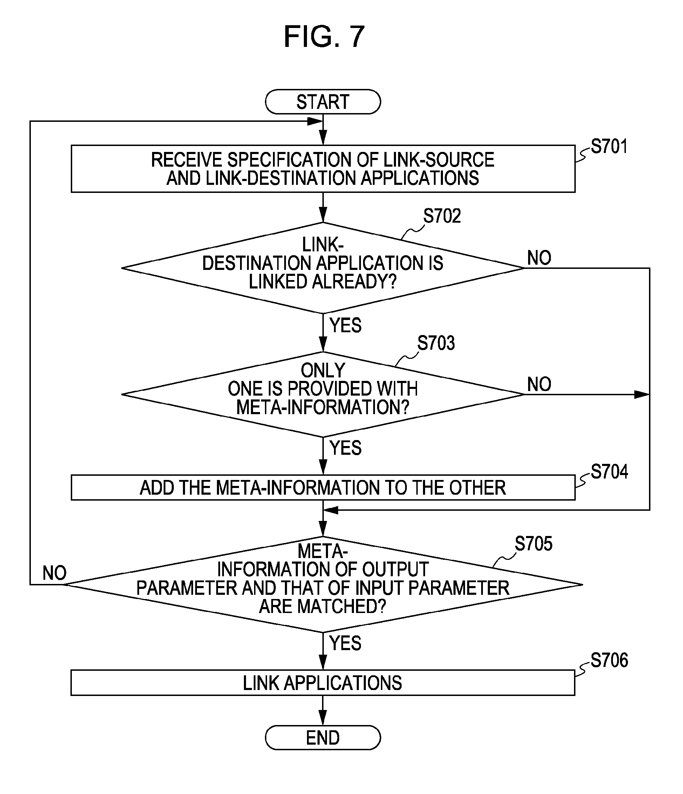

FIG. 7 is a flowchart showing the steps of a data linkage support process performed by the CPU 11 of the data linkage support apparatus 1 according to the first embodiment of the present invention. The CPU 11 of the data linkage support apparatus 1 receives specification of an application to serve as a link source and an application to serve as a link destination (step S701). Specifically, the CPU 11 receives specification made on a displayed application list through a click of the mouse 22 or the like, key-in of the keyboard 21, or the like.

The CPU 11 determines whether the link-destination application, whose specification has been received, is linked with another application (step S702). Specifically, the CPU 11 refers to the mashup information storage section 131 to determine whether there exists an already linked application.

When the CPU 11 determines that the link-destination application is linked with another application (YES in step S702), it determines whether only one of the output parameter of the linked another application and the input parameter of the link-destination application, whose specification has been received, is provided with meta-information (step S703). Whether only one of these parameters is provided with meta-information can be determined on the basis of whether such meta-information is stored in the mashup information storage section 131.

If the CPU 11 determines that only one of these parameters is provided with meta-information (YES in step S703), it adds the meta-information to the other of these parameters (step S704). For example, if only the output parameter of the linked another application is provided with meta-information, the CPU 11 adds the meta-information to the input parameter of the link-destination application, whose specification has been received. In contrast, if only the input parameter of the link-destination application, whose specification has been received, is provided with meta-information, the CPU 11 adds the meta-information to the output parameter of the linked another application.

If the CPU 11 determines that the link-destination application is not linked with another application (NO in step S702) or determines that the output parameter of the link-source application and the input parameter of the link-destination application are each provided with meta-information (NO in step S703), the CPU 11 skips step S704 and determines whether the meta-information of the output parameter of the link-source application and the meta-information of the input parameter of the link-destination application are matched (step S705). If the CPU 11 determines that the pieces of meta-information are not matched (NO in step S705), it returns the process to step S701 so that applications to be linked are specified again, and then repeats the above-mentioned steps. If the CPU 11 determines that the pieces of meta-information are matched (YES in step S705), it links the link-source application and link-destination application (step S706) so that the applications can be executed as one new application.

By adopting the above-mentioned first embodiment of the present invention, meta-information explicitly added by a user or meta-information of already linked applications is collected and stored in the mashup information storage section 131. Thus, even if the input or output parameter of any of applications to be linked is not provided with meta-information, meta-information for linkage can be added on the basis of a presumption. As a result, the applications, such as web services, can be linked (mashed up) reliably.

### Second Embodiment

A configuration of a data linkage system including an apparatus for supporting data linkage among multiple applications according to a second embodiment of the present invention is similar to that of the first embodiment. Therefore, same elements are given same reference numerals and will not be described in detail. The second embodiment differs from the first embodiment in that weights are assigned to pieces of meta-information added to input parameters and output parameters.

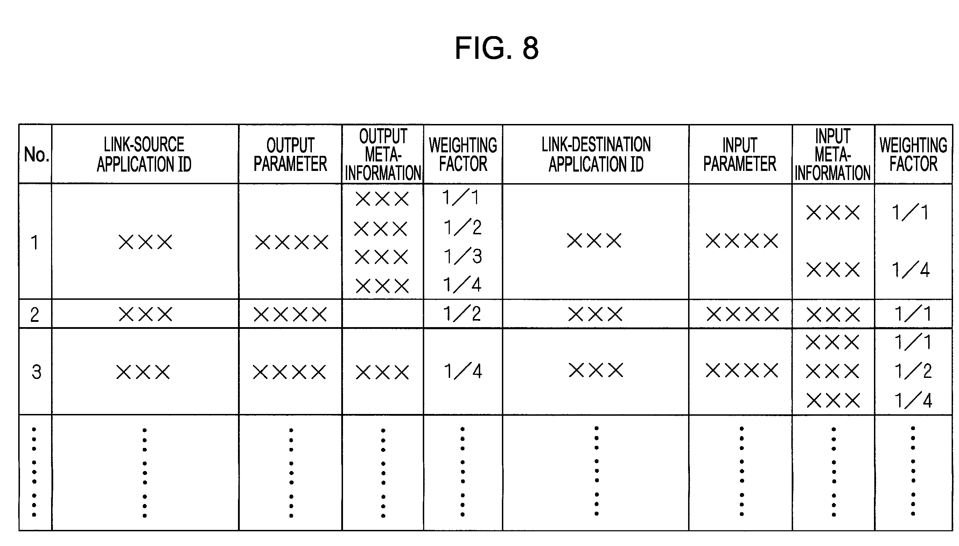

For this reason, weighting factors are assigned to pieces of information stored in the mashup information storage section 131 (meta-information storage section) of the storage unit 13. FIG. 8 is a drawing showing an example configuration of data stored in the mashup information storage section 131 according to the second embodiment of the present invention.

As shown in FIG. 8, the mashup information storage section 131 stores the link-source application ID that is information for identifying a mashed-up link-source application, the output parameter of the link-source application, pieces of output meta-information added to the output parameter, the weighting factors of the pieces of the output meta-information, and the link-destination application ID that is information for identifying a mashed-up link-destination application, the input parameter of the link-destination application, pieces of input meta-information added to the input parameter, and the weighting factors of the pieces of the input meta-information. Multiple pieces of meta-information can be stored for each input or output parameter, and a weighting factor can be stored for each meta-information.

The weighting factor is set as follows: if meta-information is explicitly specified, for example, if specification of meta-information is directly received, 1/1 is set; if meta-information added to the parameter of an application, which is a link partner, is used, 1/2 is set; and if meta-information is added on the basis of an presumption according to other linkage information, 1/4 is set. The method for setting weighting factors is not limited to the above-mentioned method and may be any setting method as long as priorities for using meta-information can be set.

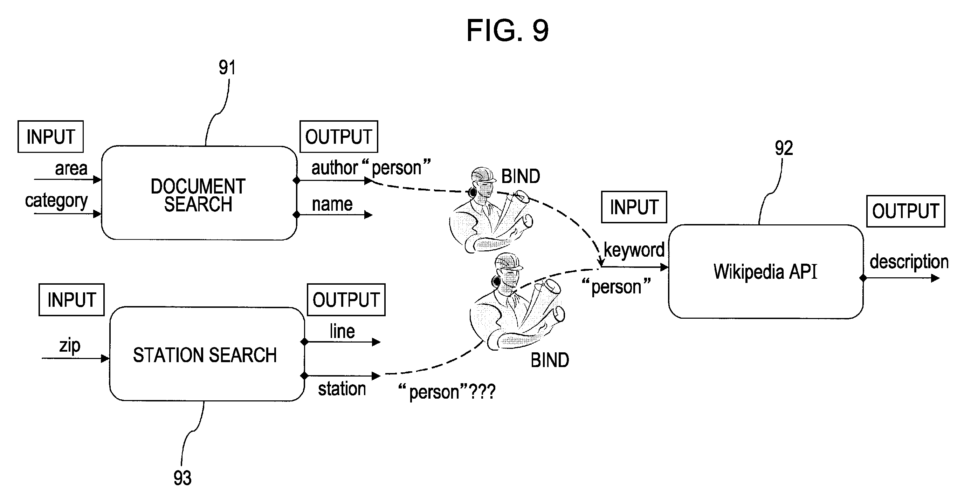

FIG. 9 is a drawing showing mashup operation using meta-information. In FIG. 9, first, an attempt is made to link an application 91 for performing a document search process and an application 92 for performing a search process using a general-purpose dictionary, Wikipedia, as a biographical dictionary. In this case, the output parameters of the application 91 are "author" indicating the name of an author and "name" indicating the name of a document. The output parameter, author, is provided with meta-information "person."

On the other hand, the input parameter of the application 92 is "keyword" and uses Wikipedia, which is a general-purpose dictionary. Therefore, as a matter of course, the input parameter is not provided with meta-information. Therefore, in order to link the application 91 and application 92, the meta-information "person" is automatically added to the input parameter, keyword, of the application 92.

In order to link an application 93 for performing a station search process to the application 92 with the application 91 and application 92 linked, it is necessary to bind together the output parameter, station, indicating the name of a station, of the application 93 and the input parameter, keyword, of the application 92. However, the input parameter, keyword, of the application 92 is already provided with the meta-information "person." Therefore, if the output parameter of the application 93 and the input parameter of the application 92 are bound together, the meta-information "person" indicating the name of a person will be transmitted to the output parameter, station, indicating the name of a station. Therefore, even when performing a station name search process, there is always a possibility that a person name search dictionary is selected as a candidate. This may hamper linkage between the applications.

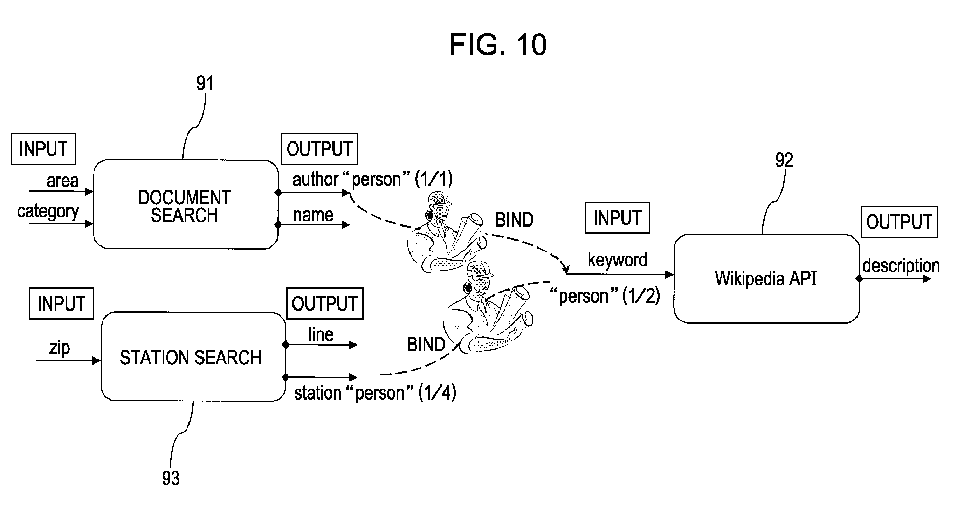

For this reason, in the second embodiment, weights are assigned on the basis of the situation where meta-information is provided. Thus, unexpected transmission of meta-information is prevented. FIG. 10 is a drawing showing mashup operation in a case where weighting factors are assigned.

In FIG. 10, first, an attempt is made to link the application 91 for performing a document search process and the application 92 for performing a search process using the general-purpose dictionary, Wikipedia, as a biographical dictionary. In this case, the output parameters of the application 91 are "author" indicating the name of an author and "name" indicating the name of a document. The output parameter, author, is provided with the meta-information "person." Since the meta-information "person" has been added to the output parameter, author, explicitly, the meta-information "person" is provided with the weighting factor 1/1.

On the other hand, the input parameter of the application 92 is "keyword" and uses Wikipedia, which is a general-purpose dictionary. Therefore, as a matter of course, the input parameter is not provided with meta-information. Therefore, in order to link the application 91 and application 92, the meta-information "person" is automatically added to the input parameter, keyword, of the application 92. Since meta-information is added to only one of applications to be linked, the meta-information "person" added to the input parameter, keyword, is provided with a weighting factor of 1/2.

In order to ling the application 93 for performing a station search process and the application 92 with the application 91 and application 92 linked, it is necessary to bind together the output parameter, station, indicating the name of a station, of the application 93 and the input parameter, keyword, of the application 92. However, the input parameter, keyword, of the application 92 is already provided with the meta-information "person." Therefore, if the output parameter, station, of the application 93 and the input parameter, keyword, of the application 92 are bound together, the meta-information "person" indicating the name of a person may be transmitted to the output parameter, station, indicating the name of a station. However, in this case, the link partner application, that is, application 92 has been referred to and then the meta-information thereof has been added to the application 93. Therefore, the meta-information "person" added to the output parameter, station, is provided with the weighting factor of 1/4.

As seen, meta-information added to each of the output parameters and input parameters is provided with a weighting factor. Therefore, if multiple output parameters and/or input parameters are stored, a meta-information combination having the highest priority, that is, a meta-information combination regarded as having the highest among the sums of weighting factors is selected. Thus, unexpected transmission of meta-information can be prevented.

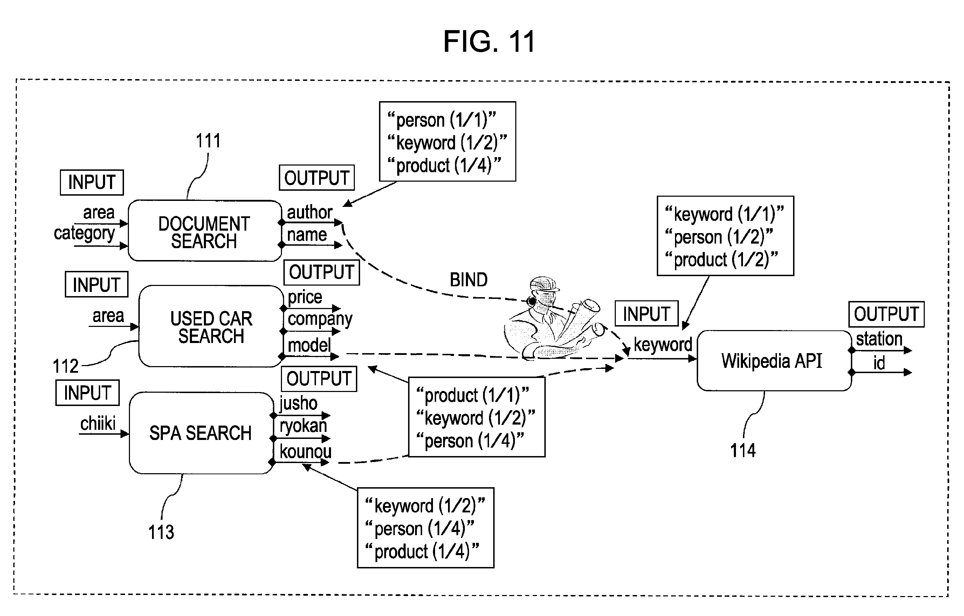

A specific example where multiple pieces of meta-information are provided will be described. FIG. 11 is a schematic drawing showing information stored in the mashup information storage section 131 as information on the existing links between applications.

In FIG. 11, an application 111 for performing a document search process, an application 112 for performing a used car search process, and an application 113 for performing a spa search process are linked with an application 114 for performing a search process using Wikipedia, which is a general-purpose dictionary. For the application 111, the output parameter, author, thereof is provided with pieces of meta-information "person," "keyword," and "product," which are provided with the weighting factors of 1/1, 1/2, and 1/4," respectively.

Similarly, for the application 112, the output parameter, model, thereof is provide with the pieces of meta-information "product," "keyword," "person," which are provided with the weighting factors of 1/1, 1/2, and 1/4, respectively. For the application 113, the output parameter, kounou, thereof is provided with the pieces of meta-information "keyword," "person," and "product," which are provided with the weighting factors of 1/2, 1/4, and 1/4, respectively.

On the other hand, for the application 114, which is the link destination, the input parameter, keyword, thereof is provided with the pieces of meta-information "keyword," "person," and "product," which are provided with the weighting factors of 1/1, 1/2, and 1/2, respectively.

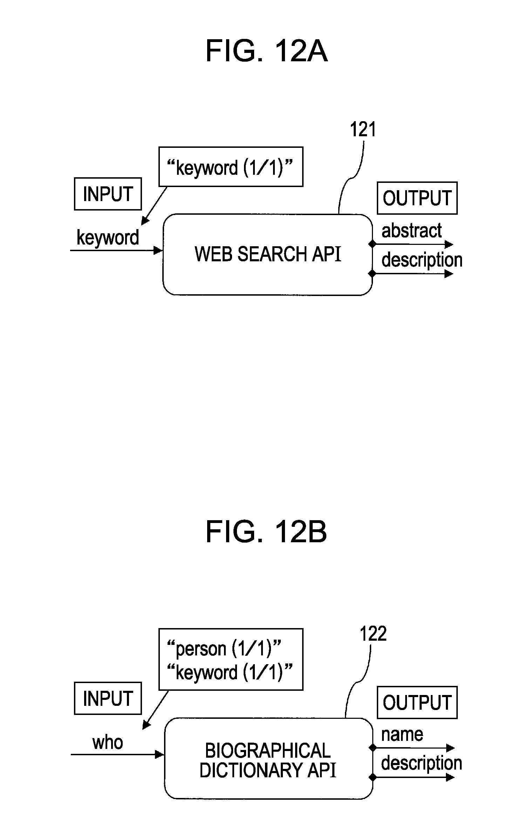

FIG. 12 is a schematic drawing showing an example where priorities are set for other applications with respect to the application links shown in FIG. 11. FIG. 12(a) shows an application 121, which is an API for performing a web search. The input parameter, keyword, thereof is provided with the meta-information "keyword," which is provided with the weighting factor of 1/1.

In this case, the weighting factor of the meta-information "keyword" of each of the applications 111, 112, and 113 is 1/2. Therefore, it is understood that any of the application 111, 112, and 113 do not take priority as a candidate for a link-source application.

FIG. 12(b) shows an application 122, which is an API for performing a person search. The input parameter, who, thereof is provided with the pieces of meta-information "person" and "keyword," which are provided with the weighting factors of 1/1 and 1/1, respectively. As for the meta-information "person," the application 111 is provided with the largest weighting factor, 1/1. As for the meta-information "keyword," the applications 111, 112, and 113 are all provided with the weighting factor of 1/2. Therefore, as for the meta-information "person," a link with the application 111 becomes the first candidate, since the application 111 is provided with the largest weighting factor, 1/1.

As seen, meta-information added to each of the output parameters and input parameters is provided with a weighting factor. Therefore, if multiple output parameters and/or input parameters are stored, a meta-information combination having the highest priority, that is, a meta-information combination regarded as having the highest among the sums of weighting factors is selected. Thus, unexpected transmission of meta-information can be prevented. Thus, unexpected transmission of meta-information can be prevented.

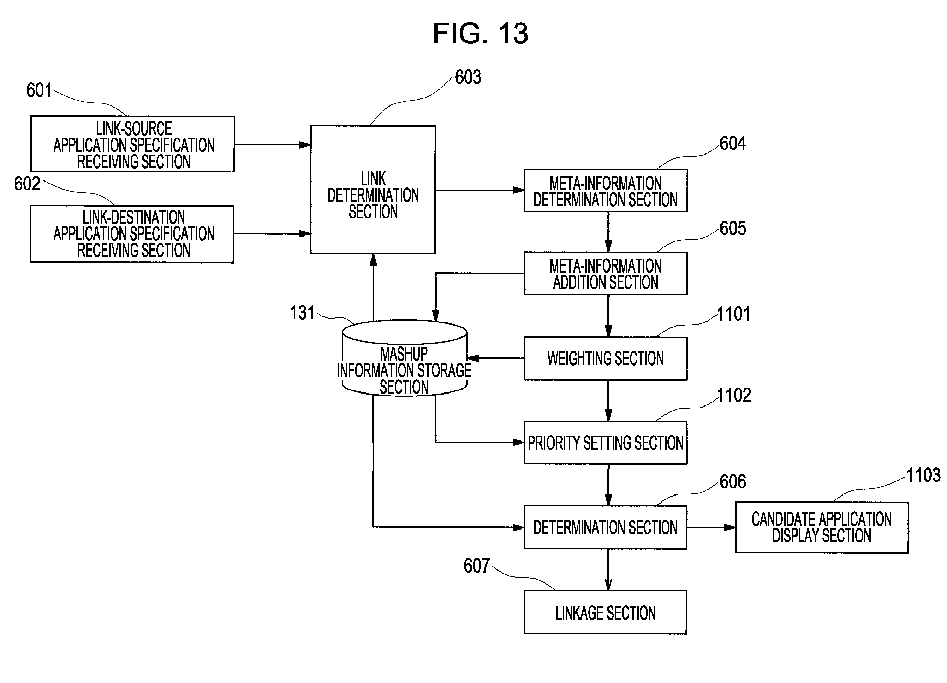

FIG. 13 is a drawing showing function blocks of the data linkage support apparatus 1 according to the second embodiment of the present invention. First, when a data link is established between applications via the network 2, meta-information added to the link-source application and/or meta-information added to the input parameter of the link-destination application are collected and stored in the mashup information storage section 131 of the storage unit 13.

The link-source application specification receiving section (link specification receiving means) 601 receives specification of an application to serve as a link source. Specifically, the link-source application specification receiving section 601 receives specification made on a displayed application list through a click of the mouse 22 or the like, key-in of the keyboard 21, or the like.

The link-destination application specification receiving section (link specification receiving means) 602 receives specification of an application to serve as a link destination. Specifically, the link-destination application specification receiving section 602 receives specification made on the displayed application list through a click of the mouse 22 or the like, key-in of the keyboard 21, or the like.

The link determination section 603 determines whether the link-destination application, whose specification has been received, is linked with another application. Specifically, the link determination section 603 refers to the mashup information storage section 131 to determine whether there exists an already linked application.

When the link determination section 603 determines that the link-destination application is linked with another application, the meta-information determination section 604 determines whether only one of the output parameter of the linked another application and the input parameter of the link-destination application, whose specification has been received, is provided with meta-information. Whether only one of these parameters is provided with meta-information can be determined on the basis of whether such meta-information is stored in the mashup information storage section 131.

If the meta-information determination section 604 determines that only one of these parameters is provided with meta-information, the meta-information addition section 605 adds the meta-information to the other of these parameters. Specifically, if only the output parameter of the linked another application is provided with meta-information, the meta-information addition section 605 adds the meta-information to the input parameter of the link-destination application, whose specification has been received. In contrast, if only the input parameter of the link-destination application, whose specification has been received, is provided with meta-information, the meta-information addition section 605 adds the meta-information to the output parameter of the linked another application.

A weighting section 1101 assigns a weighting factor to each of pieces of meta-information added to input parameters and output parameters and stores the weighting factor in the mashup information storage section 131. It is preferable to assign a weighting factor having a smaller value to meta-information added more indirectly on the basis of a presumption. This is intended to, assuming that a higher priority should be assigned to meta-information provided with an explicitly instructed weighting factor in combining pieces of meta-information and then setting priorities for adding meta-information in the descending order of the sums values of weighting factors, increase the possibility that such explicitly instructed meta-information is selected.

A priority setting section 1102 sets priorities for adding meta-information, on the basis of the weighting factors assigned by the weighting section 1101. In the second embodiment, a sum value is calculated by summing the weighting factor added to meta-information of a link-source application and the weighting factor added to meta-information of a link-destination application, and higher priorities are assigned to larger sum values. For example, if meta-information of the output parameter of a link-source application has a weighting factor of 1/1 and meta-information of the input parameter of a link-destination application has a weighting factor of 1/4, a sum value of 5/4 is calculated. If meta-information of the output parameter of another link-source application has a weighting factor of 1/2 with respect to the above-mentioned link-destination application, a sum value of 3/4 is calculated. Therefore, it can be determined that the sum value corresponding to the former link-source application has a higher priority, since the sum value is larger. Thus, it is possible to add the above-mentioned meta-information, that is, the meta-information having the weighting factor of 1/1 to the output parameter of the former link-source application.

The determination section 606 determines whether the meta-information added by the meta-information addition section 605 and the meta-information added to the output parameter of the link-source application or the meta-information added to the input parameter of the link-destination application are matched. When the determination section 606 determines that both the pieces of meta-information are matched, the linkage section 607 links both applications.

If input parameters and output parameters are each provided with multiple pieces of meta-information, the determination section 606 may make multiple determination results. For this reason, a candidate application display section 1103 may be provided to display a list of candidate applications including meta-information. This can prevent establishment of an erroneous link, as well as allows selecting of an application to be linked while checking the application visually.

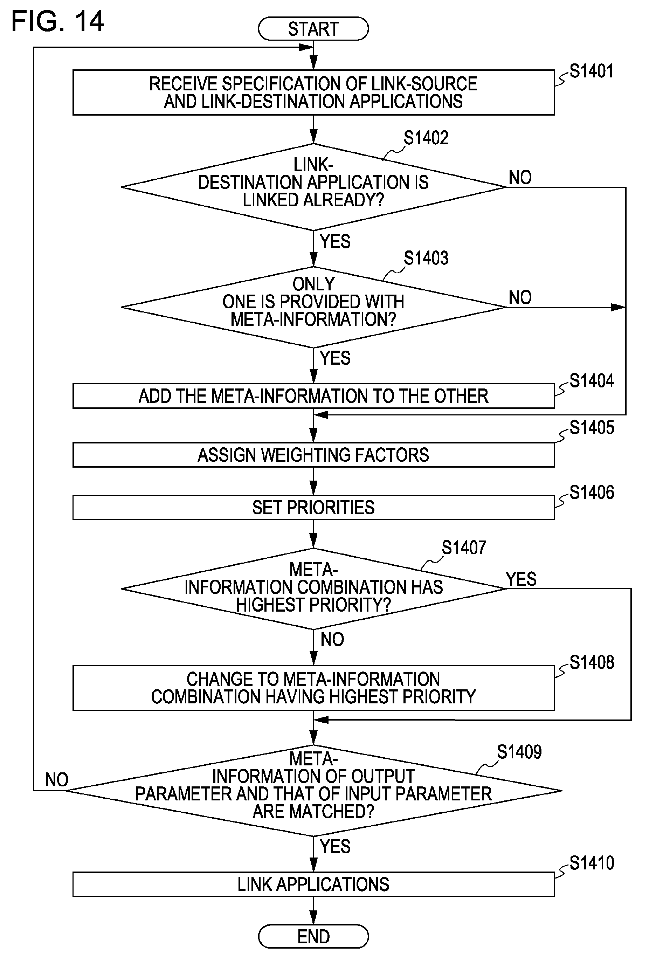

FIG. 14 is a flowchart showing the steps of a data linkage support process performed by the CPU 11 of the data linkage support apparatus 1 according to the second embodiment of the present invention. The CPU 11 of the data linkage support apparatus 1 receives specification of an application to serve as a link source and an application to serve as a link destination (step S1401). Specifically, the CPU 11 receives specification made on a displayed application list through a click of the mouse 22 or the like, key-in of the keyboard 21, or the like.

The CPU 11 determines whether the link-destination application, whose specification has been received, is linked with another application (step S1402). Specifically, the CPU 11 refers to the mashup information storage section 131 to determine whether there exists an already linked application.

If the CPU 11 determines that the link-destination application is linked another application (YES in step S1402), it determines whether only one of the output parameter of the linked another application and the input parameter of the link-destination application, whose specification has been received, is provided with meta-information (step S1403). Whether only one of these parameters is provided with meta-information can be determined on the basis of whether such meta-information is stored in the mashup information storage section 131.

If the CPU 11 determines that only one of these parameters is provided with meta-information (YES in step S1403), it adds the meta-information to the other of these parameters (step S1404). For example, if only the output parameter of the linked another application is provided with meta-information, the CPU 11 adds the meta-information to the input parameter of the link-destination application, whose specification has been received. In contrast, if only the input parameter of the link-destination application, whose specification has been received, is provided with meta-information, the CPU 11 adds the meta-information to the output parameter of the linked another application.

If the CPU 11 determines that the link-destination application is not linked with another application (NO in step S1402) or determines that both the link-source application and link-destination application are provided with meta-information (NO in step S1403), the CPU 11 skips step S1404 and assigns a weighting factor to each meta-information on the basis of the situation where each meta-information has been added (step S1405).

On the basis of the assigned weighting factors, the CPU 11 sets priorities for all combinations of pieces of meta-information of the link-source application and pieces of meta-information of the link-destination application stored in the mashup information storage section 131 (step S1406). In the second embodiment, a sum value is calculated by summing weighting factors assigned to pieces of meta-information forming each combination, and higher priorities are set for combinations having higher sum values.

On the basis of the set priorities, the CPU 11 determines whether a combination of added pieces of meta-information is a combination having the set highest priority (step S1407). If the CPU 11 determines that the combination is not a combination having the highest priority (No in step S1407), it changes the combination to a combination having the highest priority (step S1408) and stores the combination having the highest priority in the mashup information storage section 131.

If the CPU 11 determines that the combination is a combination having the highest priority (YES in step S1407), it skips step S1408 and determines whether the meta-information of the output parameter of the link-source application and the meta-information of the input parameter of the link-destination application are matched (step S1409). If the CPU 11 determines that the pieces of meta-information are not matched (NO in step S1409), it returns the process to step S1401 so that applications to be linked are specified again, and then repeats the above-mentioned steps. If the CPU 11 determines that the pieces of meta-information are matched (YES in step S1409), it links both applications (step S1410) so that the applications can be executed as one new application.

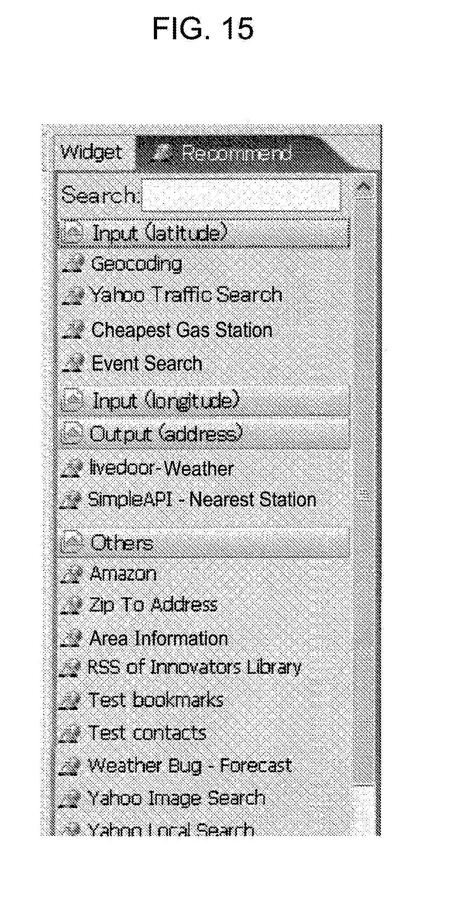

FIG. 15 is a drawing showing an example of an application list displayed on the display unit 23 of a candidate application display section 1203. As shown in FIG. 15, when receiving specification of a link-source application, the CPU 11 lists candidates for a link-destination application, which are each provided with meta-information that can be bound to the link-source application, in the descending order of priorities. By regarding input of a selection instruction from the list screen as reception of specification of a link-destination application, applications can be linked more accurately and properly.

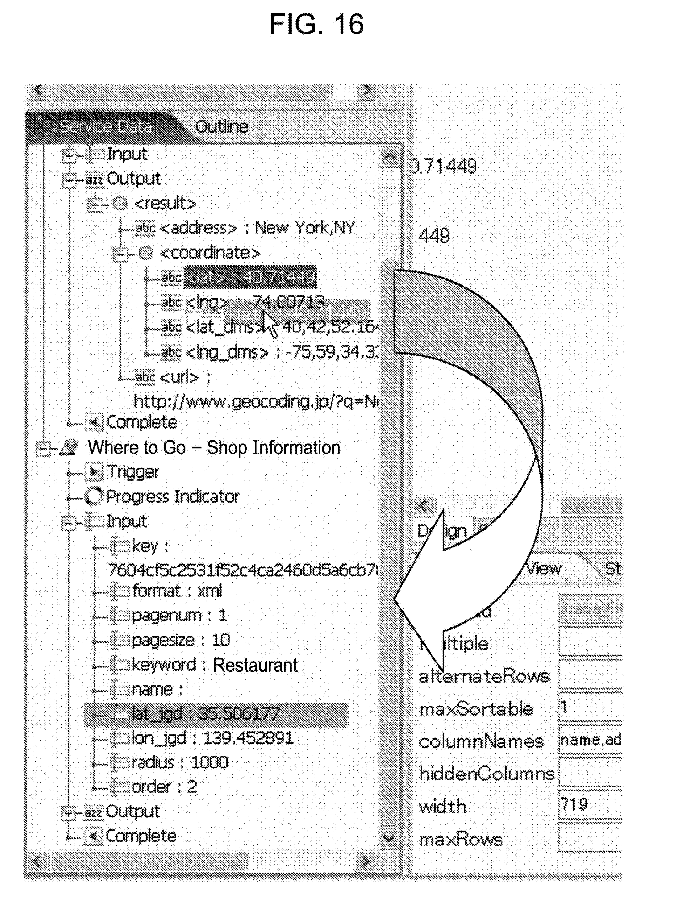

FIG. 16 is a drawing showing an example of an operation screen of a mashup tool for increasing the efficiency of mashup. As shown in FIG. 16, an application list is displayed on the display unit 23 in advance, and when receiving specification of a link-source application through a drag of the mouse 22 or the like, a link-destination application provided with meta-information that can be bound to the link-source application is highlighted. A user can select any application link easily by dropping the dragged link-source application on a desired application using the mouse 22 or the like.

As seen, by adopting the second embodiment, weights are assigned to pieces of meta-information so that priorities can be set for applications that can be linked. This allows selection of an application that can be linked, in the descending order of the priorities, as well as can prevent unexpected transmission of meta-information to each application due to automatic addition of meta-information.

The present invention is not limited to the above-mentioned embodiments and various changes, modifications, and like can be made thereto without departing from the spirit and scope of the invention. For example, the mashup information storage section may be provided in a storage unit of an external computer connected to the data linkage support system according to each embodiment via a network, and information may be read or written therefrom or thereto as necessary. Also, information may be stored in a virtual disk on a network in a distributed environment.

### [Reference Numerals]

- 1:: data linkage support system
- 2:: network
- 3:: computer
- 11:: CPU
- 12:: memory
- 13:: storage unit
- 14:: I/O interface
- 15:: communication interface
- 16:: video interface
- 17:: transportable disk drive
- 18:: internal bus
- 23:: display unit
- 90:: transportable storage medium
- 100:: computer program
- 131:: mashup information storage section

## Claims

1. An apparatus comprising:
meta information storage section for, if a data link between applications is established, storing meta information added to an output parameter of a link-source application and/or meta-information added to an input parameter of a link-destination application;
link determination section for determining whether the link-destination application is linked with another application;
meta information determination section for, if the link determination section determines that the link-destination application is linked with another application, determining whether only one of an output parameter of the another application and the input parameter of the link-destination application is provided with meta-information;
meta information providing section for, if the meta information determination section determines that only one of the output parameter of the another application and the input parameter of the link-destination application is provided with meta-information, adding the meta information to the other of the output parameter of the another application and the input parameter of the link-destination application;
determination section for determining whether the meta information added to the other by the meta-information providing section and the meta information added to the output parameter of the link-source application or the meta-information added to the input parameter of the link-destination application are matched; and
linkage section for, if the determination section determines that the pieces of meta information are matched, linking the link-source application and the link-destination application.

2. The apparatus according to Claim 1, further comprising
weighting section for assigning a weighting factor to meta-information added by the meta-information addition section.

3. The apparatus according to Claim 2, wherein
the weighting factor having a smaller value is assigned to meta-information added more indirectly on the basis of a presumption.

4. The apparatus according to any one of Claims 2 and 3, further comprising:
priority setting section for setting priorities for adding meta-information, on the basis of the weighting factor;
link specification receiving section for receiving specification of applications to be linked; and
candidate application display section for, if the link specification receiving section receives specification of a link-source application, lists link-destination applications that can be linked to the link-source application, in a descending order of the set priorities.

5. The apparatus according to any one of Claims 2 to 4, wherein
the priority setting section calculates a sum value by summing a weighting factor of meta-information added to an output parameter of a link-source application and a weighting factor of meta-information added to an input parameter of a link-destination application and sets higher priorities for larger sum values.

6. A method comprising the steps of:
if a data link between applications is established, storing meta information added to an output parameter of a link-source application and/or meta-information added to an input parameter of a link-destination application;
determining whether the link-destination application is linked with another application;
if it is determined that the link-destination application is linked with another application, determining whether only one of an output parameter of the another application and the input parameter of the link-destination application is provided with meta-information;
if it is determined that only one of the output parameter of the another application and the input parameter of the link-destination application is provided with meta-information, adding the meta information to the other of the output parameter of the another application and the input parameter of the link-destination application; determining whether the meta information added to the other and the meta information added to the output parameter of the link-source application or the meta-information added to the input parameter of the link-destination application are matched; and
if it is determined that the pieces of meta information are matched, linking the link-source application and the link-destination application.

7. A computer program product that supports data linkage between a plurality of applications and is executable by a computer, the computer program product causing the computer to function as:
meta information storage section for, if a data link between applications is established, storing meta information added to an output parameter of a link-source application and/or meta-information added to an input parameter of a link-destination application;
link determination section for determining whether the link-destination application is linked with another application;
meta information determination section for, if the link determination section determines that the link-destination application is linked with another application, determining whether only one of an output parameter of the another application and the input parameter of the link-destination application is provided with meta-information;
meta information providing section for, if the meta information determination section determines that only one of the output parameter of the another application and the input parameter of the link-destination application is provided with meta-information, adding the meta information to the other of the output parameter of the another application and the input parameter of the link-destination application;
determination section for determining whether the meta information added to the other by the meta-information providing section and the meta information added to the output parameter of the link-source application or the meta-information added to the input parameter of the link-destination application are matched; and
linkage section for, if the determination section determines that the pieces of meta information are matched, linking the link-source application and the link-destination application.

8. The computer program product according to Claim 7, the computer program product causing the computer to further function as
weighting section for assigning a weighting factor to meta-information added by the meta-information addition section.

9. The computer program product according to Claim 8, wherein
the weighting factor having a smaller value is assigned to meta-information added more indirectly on the basis of a presumption.

10. The computer program product according to any one of Claims 8 and 9, the computer program product causing the computer to further function as:
priority setting section for setting priorities for adding meta-information, on the basis of the weighting factor;
link specification receiving section for receiving specification of applications to be linked; and
candidate application display section for, if the link specification receiving section receives specification of a link-source application, listing link-destination applications that can be linked to the link-source application, in a descending order of the set priorities.

11. The computer program product according to any one of Claims 8 to 10, the computer program product causing the priority setting section to function as:
section for calculating a sum value by summing a weighting factor of meta-information added to an output parameter of a link-source application and a weighting factor of meta-information added to an input parameter of a link-destination application; and
section for setting higher priorities for larger sum values.
